# EUROPEAN PATENT APPLICATION

(11) **EP 4 174 771 A1**
(43) Date of publication of application: **03.05.2023**
(21) Application number: 21834677.3
(22) Date of filing: 30.06.2021
(51) Int. Cl.: G06T 7/292

(54) **IMPLEMENTATION METHOD AND APPARATUS FOR BEHAVIOR ANALYSIS OF MOVING TARGET, AND ELECTRONIC DEVICE**

(30) Priority: 30.06.2020 CN 202010614160
(71) Applicant: Hangzhou Hikvision Digital Technology Co., Ltd., Hangzhou, Zhejiang 310051 (CN)
(72) Inventor: HAO, Xianyi, Hangzhou, Zhejiang 310051 (CN)
(74) Representative: Epping - Hermann - Fischer
(86) International application number: PCT/CN2021/103658
(87) International publication number: WO 2022/002151

(57) **Abstract**

In the embodiments of the present application, a reference position of a second camera associated in the behavior analysis on a moving target is determined in a monitoring area of a first camera, a video image containing the moving target captured by the first camera is displayed, so that when the moving target moves into a range to which a reference position of a target camera belongs in the reference position of the second camera, the video image of the target camera can be displayed. Since the reference position of the second camera associated in the behavior analysis on a moving target is determined in the monitoring area of the first camera, it can be determined during the behavior analysis on a moving target, that the moving target will subsequently appear in a video image of a target camera according to the range of the reference position of the target camera into which the moving target in the video image of the first camera moves, thereby switching to the video image of the target camera for displaying, that is, the behavior analysis on the moving target can be continued, so as to complete the continuous behavior analysis on the moving target, and improve the accuracy of behavior analysis.

## Description

The present application claims the priority to a Chinese patent application No. 202010614160.0 filed with the China National Intellectual Property Administration on June 30, 2020 and entitled "Implementation method and device for moving target tracking and electronic equipment", which is incorporated herein by reference in its entirety.

### Technical Field

The present application relates to the technical field of video surveillance, in particular to a method and apparatus for implementing behavior analysis on a moving target and an electronic device.

### Background

Video monitoring technology has been widely used in various industries. In order to achieve global video monitoring in a region, a video monitoring system has been set up. The video monitoring system includes a video monitoring server and multiple cameras, wherein for each camera in the multiple cameras, its visual area covers one of sub areas divided by the monitoring area for performing video monitoring on this sub area in real time. The video monitoring server uses the resource tree method to manage video images collected by multiple cameras, takes each camera as a leaf node, and stores the received video images in the leaf node cache of a corresponding camera in chronological order. The video monitoring server also includes a display unit, which can display the video images of one or more cameras called from the resource tree to the user on the display screen.

When viewing a video image on the display screen of the video monitoring server, the user sometimes needs to implement behavior analysis on a moving target in the video image. The whole process is as follows: in step 1, the user calls out a video image of a camera currently monitoring a moving target for playback; in step 2, when the moving target moves out of a visual area covered by the camera currently monitoring the moving target, the user determines which camera covers the visual area where the moving target may appear according to the possible moving direction of the moving target, manually searches the resource tree in the video monitoring server, finds a video image of the determined camera in a time period after the moving target is moved out for playback; in step 3, the step 2 is repeated to complete the behavior analysis on the moving target until the user manually stops the behavior analysis or the target moves to an area not covered by all cameras.

It can be seen that the behavior analysis information of the moving target is determined according to the position of each camera for a moving target. In the behavior analysis on the moving target, if the user is not clear about the camera location and the range of visible areas, the user cannot find the video image containing the moving target from the resource tree of the video monitoring server timely and accurately for playback. The behavior analysis is time-consuming and prone to errors, which leads to the loss of the moving target. Furthermore, in the behavior analysis on a moving target, it is very time-consuming to manually switch the video images of different cameras in different time periods for playback, and it requires to manually record the position of each camera and the time information of the moving target, it is difficult to form an evidence chain and it is very inconvenient for users to operate.

### Summary

In view of this, the embodiments of the present application provide a method for implementing behavior analysis on a moving target, which can improve the accuracy of behavior analysis.

The embodiments of the present application also provide an apparatus for implementing behavior analysis on a moving target, which can improve the accuracy of behavior analysis.

The embodiments of the present application provide a method for implementing behavior analysis on moving target, which includes:
determining a reference position of a second camera in a monitoring area of a first camera, the second camera is a camera associated with the first camera in the behavior analysis on the moving target, and the reference position of the second camera represents a position of the second camera relative to the first camera;
displaying a video image containing the moving target captured by the first camera;
displaying a video image of a target camera when the moving target moves into a range to which a reference position of the target camera belongs in the reference position of the second camera.

Optionally, determining a reference position of a second camera in a monitoring area of a first camera includes:
determining a position of a reference point for the reference position of the second camera in the monitoring area of the first camera;
determining the reference position of the second camera in the monitoring area of the first camera according to the position of the reference point in the monitoring area of the first camera, an image resolution of the first camera, and a display resolution of a display interface.

Optionally, the reference point for the reference position of the second camera is a reference point in a hotspot representing the reference position of the second camera;
wherein determining the position of the reference point for the reference position of the second camera in the monitoring area of the first camera includes:
determining a position of the reference point in the hotspot representing the reference position of the second camera in the monitoring area;
wherein determining the reference position of the second camera in the monitoring area of the first camera according to the position of the reference point in the monitoring area of the first camera, an image resolution of the first camera, and a display resolution of a display interface includes:
determining the hotspot representing the reference position of the second camera in the monitoring area of the first camera according to the position of the reference point in the hotspot in the monitoring area, the image resolution of the first camera, the display resolution of the display interface and size information of the hotspot.

Optionally, the reference point for the reference position of the second camera is a reference point in a hotspot representing the reference position of the second camera;
determining the reference position of the second camera in the monitoring area of the first camera is determining the hotspot representing the reference position of the second camera in the monitoring area of the first camera, which specifically includes:
determining the position of the reference point in the hotspot representing the reference position of the second camera in the monitoring area;
determining a hotspot representing the reference position of the second camera in the monitoring area of the first camera according to the position of the reference point in the hotspot in the monitoring area, an image resolution of the first camera, a display resolution of a display interface and size information of the hotspot.

Optionally, before displaying a video image of a target camera when the moving target moves into a range to which a reference position of the target camera belongs in the reference position of the second camera, the method includes:
determining whether the moving target moves into the range to which the reference position of the target camera belongs in the reference position of the second camera; or,
after determining the reference position of the second camera in the monitoring area of the first camera, the method comprises: marking the reference position of the second camera on the video image containing the moving target captured by the first camera;
before displaying the video image of the target camera, the method comprises:
   acquiring an instruction for selecting the reference position of the target camera.

Optionally, displaying the video image of the target camera includes:
switching to display the video image of the target camera in a window where the video image containing the moving target captured by the first camera is displayed, wherein, in the window, a time corresponding to a first frame of the video image of the target camera displayed and a time corresponding to a last frame of the video image of the first camera displayed are continuous.

Optionally, displaying the video image of the target camera includes:
determining a reference position of an associated camera in a monitoring area of the target camera, wherein the associated camera is a camera associated with the target camera in the behavior analysis on the moving target, and the reference position of the associated camera represents a position of the associated camera relative to the target camera;
displaying a video image containing the moving target captured by the target camera.

Optionally, the video image containing the moving target captured by the first camera is displayed in a central sub-window, a video image of the second camera is displayed in an edge sub-window, and an arrangement position of the edge sub-window is set according to the reference position of the second camera to which the displayed video image belongs relative to the first camera;
wherein displaying the video image of the target camera includes:
switching the video image of the target camera displayed in the edge sub-window to the central sub-window for displaying, wherein the arrangement position of the edge sub-window is adjusted according to the reference position of an associated camera of the target camera to which the displayed video image belongs relative to the target camera, and the edge sub-window displays a video image of the associated camera of the target camera.

Optionally, displaying, by the edge sub-window, the video image of the associated camera of the target camera includes:
if the associated camera of the target camera to which the video image displayed in the edge sub-window belongs is the same as a target camera associated with the first camera to which the video image displayed in the central sub-window belongs before switching the central sub-window, continuing, by the edge sub-window, to display the video image; otherwise, switching the video image displayed in the edge sub-window to the video image captured by the associated camera of the target camera.

Optional, the video image containing the moving target captured by the first camera is displayed in a central sub-window, a video image of the second camera is displayed in an edge sub-window, the video image of the second camera displayed in the edge sub-window is determined according to a preset sub-window layout rule, wherein the sub-window layout rule comprises multiple corresponding relationships, each corresponding relationship comprises a camera corresponding to the edge sub-window when a video image of a third camera is displayed in the central sub-window, the third camera is one of the first camera and the second camera;
wherein displaying the video image of the target camera includes:
switching the video image of the target camera displayed in the edge sub-window to the central sub-window for displaying; when the video image of the target camera is displayed in the central sub-window, determining an associated camera of the target camera corresponding to each edge sub-window according to a target correspondence in the sub-window layout rule, and displaying a video image of the associated camera in this edge sub-window, wherein the target correspondence comprises a camera corresponding to the edge sub-window when the video image of the target camera is displayed in the central sub-window.

Optionally, the method further includes:
each time the displaying of the video image is switched, recording a behavior analysis operation, and recording a display mode of the video image corresponding to each behavior analysis operation, and the display mode includes a correspondence between the central sub-window and the edge sub-window and the camera to which the video image belongs;
when acquiring a forward behavior analysis instruction or a backward behavior analysis instruction, determining a target behavior analysis operation corresponding to the forward behavior analysis instruction or the backward behavior analysis instruction;
displaying a video image of a corresponding camera in the central sub-window and the edge sub-window based on the display mode of the video image corresponding to the target behavior analysis operation.

The embodiments of the application also provide an apparatus for implementing behavior analysis on a moving target, wherein the apparatus includes an associated camera configuration unit and a display control unit, wherein,
the associated camera configuration unit is configured for determining a reference position of a second camera in a monitoring area of a first camera, the second camera is a camera associated with the first camera in the behavior analysis on the moving target, and the reference position of the second camera represents a position of the second camera relative to the first camera;
the display control unit is configured for displaying a video image containing the moving target captured by the first camera; displaying a video image of a target camera when the moving target moves into a range to which a reference position of the target camera belongs in the reference position of the second camera.

The embodiments of the present application also provide an electronic device, including: a processor of one or more processing cores, a memory of one or more computer readable storage medium, and a computer program stored on the memory and executable by the processor, wherein the program, when executed by the processor, causes the processor to implement the method for implementing behavior analysis on a moving target described in the above embodiment is realized.

In another embodiment, there is provided a non-transitory computer-readable storage medium having stored thereon instructions, wherein a portion of the instructions, when executed by a processor, causes the processor to implement the method described in the above embodiment.

In another embodiment, it is provided a computer program product containing instructions which, when running on a computer, cause the computer to implement the method described in the above embodiment.

As shown above, in the embodiments of the present application, a reference position of a second camera associated in the behavior analysis on a moving target is determined, and the video image containing the moving target captured by the first camera is displayed, so that when the moving target moves into a range to which a reference position of a target camera belongs in the reference position of the second camera, the video image of the target camera can be displayed. Since the reference position of the second camera associated in the behavior analysis on the moving target is determined in the monitoring area of the first camera, it can be determined during the behavior analysis on a moving target, that the moving target will subsequently appear in a video image of a target camera according to the range of the reference position of the target camera into which the moving target in the video image of the first camera moves, thereby switching to the video image of the target camera for displaying, that is, the behavior analysis on moving target can be continued, so as to complete the continuous behavior analysis on the moving target, and improve the accuracy of behavior analysis. Further, the embodiments of the present application can accurately select, based on a moving trend range of the moving target in the behavior analysis, a target camera with a video image with the moving trend range, and display the video image of the target camera, thus reducing the possibility of selecting a wrong camera in the behavior analysis on the moving target, and reducing the time for switching to display video images of different cameras.

### Brief Description of the Drawings

In order to more clearly describe the technical solution of the embodiments of the application and the prior art, drawings needed in the embodiments and the prior art will be briefly described below. Obviously, the drawings described below are for only some embodiments of the present application, one of ordinary skills in the art can also obtain other drawings based on these drawings.
FIG. 1 is a flow diagram of a method for implementing behavior analysis on a moving target;
FIG. 2 is an exemplary schematic diagram of a reference position of a second camera in a monitoring area of a first camera provided by an embodiment of the present application;
FIG. 3 is a schematic diagram of a picture captured by a first camera provided by an embodiment of the present application;
FIG. 4 is a flow diagram of a method for implementing behavior analysis on a moving target;
FIG. 5 is a schematic diagram of a display example of a display interface in a multi-window mode provided by an embodiment of the present application;
FIG. 6 is a schematic diagram of a display example of a display interface in a single window mode provided by an embodiment of the present application;
FIG. 7 is a schematic diagram of an apparatus for implementing behavior analysis on a moving target provided by an embodiment of the present application;
FIG. 8 is a schematic diagram of an exemplary structure of an electronic device provided by an embodiment of the present application;
FIG. 9 is a schematic diagram of a specific structure of an electronic device provided by an embodiment of the present application.

### Detailed Description

In order to make objectives, technical solutions and advantages of the present application more apparent, the present application now will be described in detail with reference to the accompanying drawings and the detailed description. Obviously, the embodiments described are only some of the embodiments of the present application instead of all the embodiments. All other embodiments obtained by those skilled in the art based on the embodiments of the present application belong to the scope of the present application.

In related technologies, in order to perform behavior analysis on a moving target, the user needs to determine a camera that provides a video image of an area where the moving target is located according to a moving direction of the moving target, and call a video image of a corresponding time period for playback. Therefore, the user needs to be familiar with a visual area of each camera in a monitoring area, manual switching is time-consuming and labor-intensive, and the accuracy of behavior analysis is not high. In order to overcome this defect, in an embodiment of the present application, a reference position of a second camera associated in the behavior analysis on a moving target is determined in the monitoring area of the first camera, and a video image containing the moving target captured by the first camera is displayed, so that when the moving target moves into a range to which a reference position of a target camera belongs in the reference position of the second camera, the video image of a target camera can be displayed. Since the reference position of the second camera associated in the behavior analysis on a moving target is determined in the monitoring area of the first camera, it can be determined during the behavior analysis on a moving target, that the moving target will subsequently appear in a video image of a target camera according to the range of the reference position of the target camera to which the moving target in the video image of the first camera moves, thereby switching to the video image of the target camera for displaying, that is, the behavior analysis on the moving target can be continued, so as to complete the process of continuous behavior analysis on the moving target, and improve the accuracy of behavior analysis.

Further, the embodiment of the present application can accurately select a target camera with a video image based on a moving trend range of the moving target in the behavior analysis, and display the video image of the target camera, thus reducing the possibility of selecting a wrong camera in the behavior analysis on a moving target, and reducing the time for switching to display video images of different cameras.

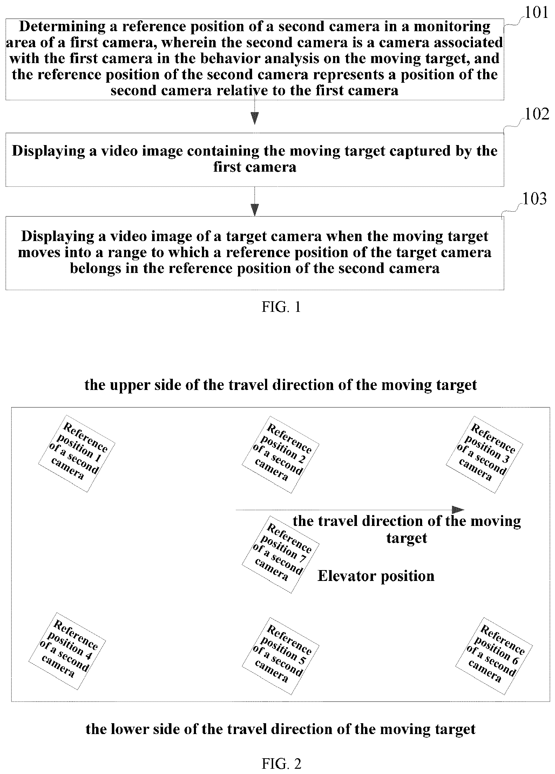

FIG. 1 is a flow diagram of a method for implementing behavior analysis on a moving target provided by an embodiment of the present application, the specific steps include:
step 101, determining a reference position of a second camera in a monitoring area of a first camera, the second camera is a camera associated with the first camera in the behavior analysis on a moving target, and the reference position of the second camera represents a position of the second camera relative to the first camera;
step 102, displaying a video image containing a moving target captured by the first camera;
step 103, displaying a video image of the target camera when the moving target moves into a range to which a reference position of a target camera belongs in the reference position of the second camera.

In the embodiment of the present application, the second camera associated with the first camera in the behavior analysis on a moving target is actually a camera that can be marked with a reference position in the monitoring area of the first camera. A monitoring area of the first camera partially overlaps with a monitoring area of the second camera, so that when the moving target moves from the monitoring area of the first camera toward the reference position of the second camera, and to the range of the reference position of the second camera, the moving target will appear in the monitoring area of the second camera. Since the installation position of each camera is determined, the corresponding monitoring area is also determined. In this way, the second camera associated with the first camera can be determined according to the monitoring area corresponding to each camera. The second camera associated with the first camera can be a camera whose monitoring area partially overlaps with the monitoring area of the first camera.

The "behavior analysis" in the embodiment of the present application refers to a moving process of a moving target, i.e., the process of displaying an action track of the moving target by displaying a video image including the moving target.

For example, FIG. 2 is an exemplary schematic diagram of a reference position of a second camera in a monitoring area of a first camera provided by an embodiment of the present application. As shown in FIG. 2, the monitoring area of the first camera is a corridor. The travel direction of the moving target is shown in the figure as moving from left to right in the monitoring area, both sides of the travel direction of the moving target are shown as the upper and lower sides of the monitoring area in the figure. For both sides of the travel direction of the moving target, three cameras are uniformly distributed above each side, an elevator is set at the center of the corridor, there is a camera above the elevator position. In this case, in the monitoring area of the first camera, it is necessary to calibrate reference positions of these cameras, that is, a camera reference position is marked at the center of the monitoring area of the first camera in the figure, and three camera reference positions are uniformly marked on each side of the upper and lower sides of the monitoring area of the first camera.

In the embodiment of the present application, there can be many second cameras associated with the first camera in the behavior analysis on moving target, such as 8 second cameras, which are no limit here, as long as it does not exceed a set limit of the number of associated cameras. The limit value of the number of associated cameras is determined according to the number of associated cameras actually in the monitoring area of the first camera, for example, 8.

In the embodiment of the present application, there are two ways to determine the reference position of the second camera in the monitoring area of the first camera, which are described in detail below.

In a first way, the reference position of the second camera is set as position coordinates in the monitoring area of the first camera.

Specifically, determining the reference position of the second camera in the monitoring area of the first camera includes:
determining a position of a reference point for the reference position of the second camera in the monitoring area of the first camera;
determining the reference position of the second camera in the monitoring area of the first camera according to the position of the reference point in the monitoring area of the first camera, an image resolution of the first camera, and a display resolution of a display interface.

The implementation process of the first way includes: in a first step, capturing a picture of a monitoring area of a first camera by a first camera, the position of the reference point in the monitoring area of the first camera can be a position of the reference point in the captured picture of the monitoring area of the first camera, the resolution of the picture is taken as the image resolution of the first camera, and marking position coordinates of the reference point identifying the reference position of the second camera in the picture; in a second step, dividing the position coordinates of the reference point of the reference position of the second camera by the image resolution of the first camera; in a third step, multiplying the display resolution of the display interface by the result obtained in the second step as a determined reference position of the second camera.

In one case, with the above process, the result calculated in the first and second steps can be stored. When the video image of the first camera is displayed, the third step is performed. Preferably, after performing the third step, the determined reference position of the second camera can also be displayed in the video image of the first camera, wherein the video image of the first camera is the picture of the monitoring area of the first camera captured by the first camera.

Here, in order to ensure the subsequent display accuracy, the implementation process further includes: multiplying the results calculated in the first and second steps by an estimated value to obtain a product, and then storing the product. When the third step is performed, the product is multiplied by the display resolution of the display interface, and then divided by the estimated value to obtain the reference position of the second camera, preferably, the reference position of the second camera can also be displayed. This is because, when the first and two steps are completed, the calculated result is divided by the image resolution of the first camera, so the value obtained is relatively small. It is difficult to locate accurately when positioning to the display interface with this value later, and the positioning will have a deviation. Therefore, the calculated result of the first and second steps is multiplied by an estimated value, such as 1000, to obtain a larger value, which will be easy to locate when displaying.

In addition, the calculated result of the first and second steps can also be stored as a backup result required for determining a reference position of the second camera, and the reference position of the second camera calculated subsequently will not be displayed in the video image of the first camera.

In another case, the reference position of the second camera is determined by the three steps of the above process and then stored. When the video image of the first camera is displayed, the stored reference position of the second camera is directly read and displayed in the video image of the first camera. In addition, the stored reference position of the second camera may not be displayed, that is, the reference position of the second camera may not be displayed in the video image of the first camera.

In a second way, the reference position of the second camera is set as a hotspot in the monitoring area of the first camera.

Specifically, the reference point for the reference position of the second camera is a reference point in a hotspot representing the reference position of the second camera; determining the reference position of the second camera in the monitoring area of the first camera is to determine the hotspot representing the reference position of the second camera in the monitoring area of the first camera, specifically including: determining a position of the reference point in the hotspot representing the reference position of the second camera in the monitoring area; determining the hotspot representing the reference position of the second camera in the monitoring area of the first camera according to the position of the reference point in the hotspot in the monitoring area, an image resolution of the first camera, a display resolution of a display interface, and size information of the hotspot.

The implementation process of the second way includes: in a first step, capturing a picture of a monitoring area of a first camera by a first camera, the position of the reference point in the monitoring area can be the position of the reference point in the picture of the monitoring area captured by the first camera, the resolution of the picture is taken as the image resolution of the first camera, and marking in the picture, position coordinates of the reference point in the hotspot representing the reference position of the second camera in the monitoring area; in a second step, dividing the position coordinates by the image resolution of the first camera; in a third step, multiplying the display resolution of the display interface by the result obtained in the second step as a product result, the position of the hotspot is obtained as the determined reference position of the second camera based on the size information of the hotspot and the product result. Wherein, the size information of the hotspot may be preset according to factors such as the size of the video image.

In one case, with the above process, results calculated in the first and second steps can be stored, and when the video image of the first camera is displayed, the third step is performed to determine a position of a hotspot representing the reference position of the second camera, preferably, the determined reference position of the second camera, that is, the hotspot can be displayed in the video image of the first camera. Here, in order to ensure the subsequent display accuracy, the implementation process further includes: multiplying the results calculated in the first and second steps by an estimated value to obtain a product, and then storing the product; when the third step is performed, the product is multiplied by the display resolution of the display interface, and then divided by the estimated value to obtain the position of the hotspot representing the reference position of the second camera based on the size information of the hotspot, preferably, the hotspot can also be displayed. This is because, when the first and two steps are completed, the calculated result is divided by the image resolution of the first camera, so the value obtained is relatively small. It is difficult to locate accurately when positioning to the display interface with this value later, and the positioning will have a deviation. Therefore, the calculated result of the first and second steps is multiplied by an estimated value, such as 1000, to obtain a larger value, which will be easy to locate when displaying.

In addition, the calculated result of the first and second steps can also be stored as a backup result required for determining the reference position of the second camera, and the subsequently calculated reference position of the second camera will not be displayed in the video image of the first camera.

In another case, the reference position of the second camera is determined by the three steps in the above process, and then stored. When the video image of the first camera is displayed, the stored reference position of the second camera (i.e. the hotspot position) is directly read and the hotspot is displayed in the video image of the first camera based on the hotspot position. In addition, the stored reference position of the second camera, that is, the hotspot may not be displayed. That is to say, it is also possible not to display the hotspot in the video image of the first camera.

In the second way, the reference point in the hotspot of the reference position of the second camera can be a center point in the hotspot.

In the second way, the hotspot can be displayed with a transparent effect. That is to say, the hotspot can be displayed in the video image of the first camera by using a mask, the transparency of the mask is higher than 0% and lower than 100%. In this way, the picture in the video image of the first camera at the lower layer can be seen through the hotspot to achieve a transparent effect.

Give a specific example to illustrate a process of determining the reference position of the second camera in the monitoring area of the first camera, this process is a process in which the first camera captures a picture, determines a hotspot representing the reference position of the second camera in the picture, and subsequently displays the hotspot in the video image of the first camera.

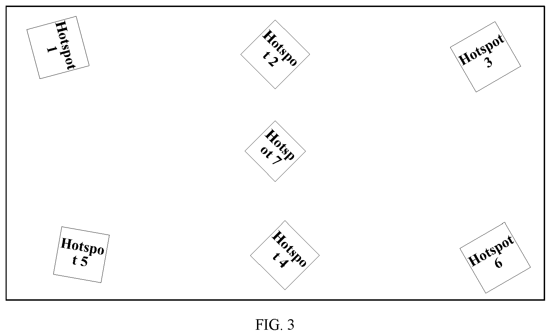

FIG. 3 is a schematic diagram of a picture captured by the first camera provided by an embodiment of the present application. In the captured picture, there are seven hotspots, that is, there are seven second cameras associated with the first camera, the reference position of each second camera is indicated by the position displayed by the seven hotspots. Wherein, the captured picture is the above-mentioned video image. For each hotspot, the setup process includes:
the size information of the hotspot is set to: 40mm*40mm; the resolution of the captured picture of the first camera is set to: w_cap*H _cap. According to the second way above, the position of the hotspot in the captured image is calculated as: X_hotspot^{∗}Y_hotspot, the reference point of the hotspot uses the center point in the hotspot.

In order to ensure the display accuracy, when storing the hotspot position, it can be multiplied by an estimated value, which is set (such as 1000) according to the display resolution of the display interface and the resolution of the captured image, the information of the hotspot is expressed as: X=X_hotspot*1000/W_cap, Y=Y_hotspot*1000/H_cap, that is, the position coordinates of the hotspot are the hotspot position multiplied by the estimated value, and then divided by the resolution of the captured image, wherein the position coordinates of the hotspot are the position coordinates of the reference point. If the hotspot position is not multiplied by the estimated value, the value obtained after dividing by the resolution of the captured image is a very small value in percentage. When positioning based on this small value in subsequent display positioning, the accuracy cannot be ensured.

When the hotspot is subsequently displayed in the video image of the first camera, calling the information of the hotspot and restoring the hotspot in the video image of the first camera includes: if the display resolution of the display interface is W_ display*H_ Display, then the position coordinates of the restored hotspot is: X_restore=X*W_display/1000, Y_restore=Y*W_display/1000, that is, the product of the stored information of the hotspot and the display resolution is divided by the estimated value to obtain the position coordinates of the hotspot. When restoring the hotspot, it is also necessary to restore the hotspot according to the position coordinates of the hotspot based on the size information of the hotspot.

For example, the position coordinates of the hotspot is taken as center point coordinates of the hotspot, and then the display area of the hotspot in the video image of the first camera can be determined according to the set size information of the hotspot: 40mm * 40mm, and then the hotspot is displayed in the display area. For example, the position coordinates of the hotspot are taken as coordinates of the upper left corner of the hotspot, and then the display area of the hotspot in the video image of the first camera can be determined according to the set size information of the hotspot: 40mm * 40mm, and then the hotspot is displayed in the display area.

In this way, the hotspot representing the reference position of the second camera is determined in the monitoring area of the first camera. When the video image is displayed by the first camera subsequently, reference positions of all the associated second cameras can be displayed on the video image using a hotspot marking method, so that the user can accurately trigger or automatically trigger the display of video images provided by the associated second cameras.

In the embodiment of the present application, the reference position of the second camera determined in the monitoring area of the first camera can also be updated in real time.

In the embodiment of the present application, when the moving target moves into a range to which a reference position of a target camera belongs in the reference position of the second camera, the switching display process can be triggered to display a video image of the target camera. Here, the range to which the reference position of the target camera belongs can be the same as or greater than or less than the reference position of the target camera, specifically, it can be greater than a set threshold range of the reference position of the target camera. For example, if it is located at the periphery of the reference position of the target camera and an edge point from the reference position of the target camera does not exceed a set threshold, it can be considered as falling into the range to which the reference position of the target camera belongs.

Or it can be less than a set threshold range of the reference position of the target camera. For example, if it is within the reference position of the target camera and an edge point from the reference position of the target camera exceeds a set threshold, it is considered as falling into the range to which the reference position of the target camera belongs. When its distance from the center point of reference position of the target camera does not exceed the set threshold, it is considered as falling into the range to which the reference position of the target camera belongs.

That is, when it is recognized that the moving target has a tendency to move to the reference position of the target camera in the reference position of the second camera according to whether the moving target has entered the range to which the reference position of the target camera belongs, or when the user monitors that the moving target has a tendency to move to the reference position of the target camera in the reference position of the second camera, a switching display process can be triggered to display a video image of the target camera.

When the moving target moves into the range to which the reference position of the target camera belongs in the reference position of the second camera, in the process of displaying the video image of the target camera, since the reference position of the target camera is associated with the target camera, when it is determined that the moving target has a tendency to move to the reference position of the target camera, a corresponding target camera can be determined according to the reference position of the target camera, the displaying of the video image of the target camera can be quickly switched. Wherein, the target camera is one of the above second cameras, and the reference position of the target camera is one of the reference positions of the second cameras.

Specifically, in the embodiment of the present application, the reference position of the second camera including the reference position of the target camera is associated with the second camera, so that when switching for display, a corresponding target camera can be determined by the reference position of the target camera, and the video image of the target camera can be quickly switched to display the video image of the target camera.

In the embodiment of the present application, when the moving target moves into a range to which a reference position of a target camera belongs in the reference position of the second camera, the process of displaying the video image of the target camera has two implementation manners.

The first implementation manner is to automatically switch a display mode.

This manner includes determining whether the moving target moves into a range to which the reference position of the target camera belongs in the reference position of the second camera. that is to say, determining whether the moving target moves into a range to which the reference position of the target camera belongs in the reference position of the second camera, if yes, displaying directly a video image of the target camera; if not, continuing for the determination.

In this manner, the reference position of the second camera determined in the monitoring area of the first camera may not be displayed, or may be displayed, which is not limited here.

The second implementation manner is to actively trigger switching a display mode.

In this manner, after determining the reference position of the second camera in the monitoring area of the first camera, it includes: marking the reference position of the second camera on the video image containing the moving target captured by the first camera; before displaying the video image of the target camera, it includes: acquiring an instruction for selecting the reference position of the target camera.

That is to say, the reference position of the second camera determined in the monitoring area of the first camera is displayed in the video image of the first camera, and then the user checks a movement trend of the moving target. When the user determines that the moving target moves into a range to which the reference position of the target camera belongs in the reference position of the second camera, by selecting the reference position of the target camera, the video image of the target camera is displayed on the display interface after the display of the video image of the target camera is triggered on the display interface.

In the method provided in the embodiment of the present application, no matter which of the above manners is used for switching display, displaying the video image of the target camera includes: switching to display the video image of the target camera in a window where the video image containing the moving target captured by the first camera is displayed, wherein, in the window, a time corresponding to a first frame of the video image of the target camera displayed and a time corresponding to a last frame of the video image of the first camera displayed are continuous.

That is to say, when displaying the video image containing the moving target captured by the first camera, the display interface is displayed in the form of a window, and in the window, the video image containing the moving target captured by the first camera is displayed, the determined reference position of the second camera can be determined in the video image, wherein a hotspot corresponding to the reference position of the second camera or a reference point representing the reference position of the second camera can be displayed in the video image. Or the reference position of the second camera may not be displayed in the video image. When automatically switching or actively triggering switching, the video image of the target camera is displayed in the window. In order to ensure the continuity of the behavior analysis on moving target, in the window, a time corresponding to a first frame of the displayed video image of the target camera and a time corresponding to a last frame of the displayed video image of the first camera are continuous.

The display mode of the window in the display interface may be a multi-window mode or a single window mode. In the single window mode, the above switching process is completed in the single window of the display interface, that is, a main window. In the multi-window mode, it is divided into a central sub-window and an edge sub-window, then the above switching process may be completed in the central sub-window.

In the embodiment of the present application, it is also possible to continuously record the behavior analysis on a moving object, and enter to a moving object behavior analysis mode when recording is to be performed. Specifically, after displaying the video image containing the moving target captured by the first camera, it further includes: when it is necessary to record the moving target behavior analysis, acquiring a recording instruction for implementing behavior analysis on the moving target, and recording the video image including the moving target captured by the first camera, and the start time for recording the video image of the first camera is a time point corresponding to the video image when the video instruction for implementing behavior analysis on the moving target is acquired. After displaying the video image of the target camera, it includes: recording the displayed video image of the target camera, and the start time for recording the video image of the target camera is a time point corresponding to the video image when the video image of the target camera is displayed.

In one embodiment, if the display mode of the window in the display interface is a single window mode, then the recording process is completed in the single window, except that video images in the single window are provided by different cameras at different time points, specifically: at an initial stage, the video image containing the moving target captured by the first camera in the single window is recorded, and the start time for recording the video image of the first camera is a time point corresponding to the video image when the recording instruction for implementing behavior analysis on the moving target is acquired.

After switching display, the video image of the target camera in the single window is recorded, and the start time for recording the video image of the target camera is a time point corresponding to the video image when the video image of the target camera is displayed. Since a time corresponding to a first frame of the displayed video image of the target camera and a time corresponding to a last frame of the displayed video image of the first camera are continuous, that is to say, the start time for recording the video image of the target camera and the end time for recording the video image of the first camera are continuous, so that the effect of continuous recording can be achieved. In this case, if the recording needs to be ended, a stop recording trigger instruction can be triggered to end the recording, but the video image of the target camera continues to be displayed in the single window in the moving target behavior analysis mode. In another case, the moving target behavior analysis mode can be directly exited, then the recording is ended, and the video image of the target camera is stopped to be displayed in the single window.

In another embodiment, if the display mode of the window in the display interface is a multi-window mode, recording can be performed in different windows during recording. Specifically, the corresponding recording of the video image containing the moving target captured by the first camera can be displayed in the central sub-window, then after receiving a moving target behavior analysis recording instruction, the video image displayed in the central sub-window is recorded. The start time for recording is the time point corresponding to the video image when the moving target behavior analysis recording instruction is obtained. After a time period, the video image displayed in the central sub-window is recorded to obtain a first recording file. After the video image of the first camera is switched to an edge sub-window for displaying, the video image of the first camera displayed in the edge sub-window may be recorded again to obtain a second recording file. The recording time point of the second recording file is the time point corresponding to the video image when the video image of the first camera is displayed in the edge sub-window. Finally, the first recording file and the second recording file are merged and stored in chronological order, which is convenient for subsequent use. Wherein, the time point of connecting the first recording file and the second recording file can be the time point for switching display, so that the first recording file and the second recording file are spliced into one recording file, in this recording file, the video picture of the first recording file is located before the time point for switching display, and the video picture of the second recording file is located after the time point for switching display.

In another embodiment, if the display mode of the window in the display interface is a multi-window mode, recording can be performed in the central sub-window during recording. Specifically, the corresponding recording of the video image containing the moving target captured by the first camera can be displayed in the central sub-window, then after receiving a moving target behavior analysis recording instruction, the video image displayed in the central sub-window is recorded. The start time for recording is a time point corresponding to the video image when the moving target behavior analysis recording instruction is acquired. After a time period, the video image displayed in the central sub-window is recorded to obtain a third recording file. After the video image of the first camera is switched to the edge sub-window for displaying and the video image of the target camera is switched to the center sub-window for displaying, and the video image of the target camera displayed in the central sub-window can be continued to record to obtain a fourth recording file. The recording time point of the fourth recording file is a time point corresponding to the video image when the video image of the target camera is displayed in the central sub-window. Finally, the third recording file and the fourth recording file are merged and stored in chronological order, which is convenient for subsequent use. Wherein, the time point connecting the third recording file and the fourth recording file may be the time point for switching display, so that the third recording file and the fourth recording file are spliced into one recording file, in this recording file, the video picture of the third recording file is located before the time point for switching display, and the video picture of the fourth recording file is located after the time point for switching display.

In the embodiment of the present application, after switching display, the video image of the target camera will be displayed in the display interface. Specifically, displaying the video image of the target camera includes: determining a reference position of an associated camera in a monitoring area of the target camera, the associated camera is a camera associated with the target camera in the behavior analysis on the moving target, and the reference position of the associated camera represents a position of the associated camera relative to the target camera; displaying the video image containing the moving target captured by the target camera.

It can be seen that the target camera and the first camera have the associated camera in the behavior analysis on moving target. Similarly, the reference position of the associated camera can also be determined in the monitoring area of the target camera, and the determination method is the same as the method for determining the reference position of the second camera in the monitoring area of the first camera. When the video image of the target camera is displayed, the video image of the target camera includes a video image of a moving target to implement continuous behavior analysis on the moving target. Of course, when displaying the video image of the target camera, the determined reference position of the associated camera may also be displayed or not displayed, in order to continue to execute the steps of automatically or manually triggering the switching display of the video image of the associated camera, and continue to complete the behavior analysis on the moving target.

In the embodiment of the present application, when the display interface uses a multi-window mode to display the video image, the video image containing the moving target captured by the first camera is displayed in the central sub-window, a video image of the second camera is displayed in the edge sub-window, and an arrangement position of the edge sub-window is set according to the reference position of the second camera to which the displayed video image belongs relative to the first camera. Displaying the video image of the target camera includes: switching the video images of the target camera displayed in the edge window to the central sub-window for displaying, the arrangement position of the edge sub-window is adjusted according to the reference position of an associated camera of the target camera to which the displayed video image belongs relative to the target camera, the edge sub-window displays a video image of the associated camera of the target camera.

Specifically, when the video image of the first camera is displayed in the central sub-window, a video image of which second camera is displayed in which edge sub-window is determined by the reference position of the second camera relative to the first camera. If the reference position of the second camera relative to the first camera is a lower left corner of the monitoring area of the first camera, the video image of the second camera is displayed in the edge sub-window at the lower left corner; if the reference position of a second camera relative to the first camera is the middle position of the monitoring area of the first camera, the video image of the second camera is displayed on the edge sub-window directly above the center sub-window, and so on.

In one embodiment, the video image containing the moving target captured by the first camera is displayed in the central sub-window, the video image of the second camera is displayed in the edge sub-window, the video image of the second camera displayed in the edge sub-window is determined according to a preset sub-window layout rule, which includes multiple corresponding relationships. Each corresponding relationship includes a camera corresponding to the edge sub-window when a video image of a third camera is displayed in the central sub-window, the third camera is one of the first camera and the second camera.

Displaying the video image of the target camera includes: switching the video image of the target camera displayed in the edge sub-window to the central sub-window for displaying, when the video image of the target camera is displayed in the central sub-window, determining an associated camera of the target camera corresponding to each edge sub-window according to a target correspondence in the sub-window layout rule, displaying a video image of the associated camera in this edge sub-window, the target correspondence comprises a camera corresponding to the edge sub-window when the video image of the target camera is displayed in the central sub-window.

A sub-window layout rule of the display interface can be set. According to the set layout rule, when displaying in multi sub-window mode, for each sub-window, the video image of the corresponding camera to be displayed is respectively called for displaying. For example, a video image of a certain camera is displayed in the center sub-window. Based on the sub-window layout rule, the video image of the associated camera displayed in each edge sub-window is determined according to the reference position of the associated camera determined in the monitoring area of the camera, and then the video image of the corresponding associated camera is respectively called for displaying. In this way, video images of multi sub-windows can be called according to the sub-window layout rule for setting the display interface, without the need to plan and store the video images in advance.

In an optional embodiment, the sub-window layout rule can include multiple correspondences, each of which includes a camera corresponding to the edge sub-window when the video image of the third camera is displayed in the central sub-window. Wherein the third camera is one of the first camera and the second camera. Specifically, when the third camera is the first camera described above, a correspondence can be set between the central sub-window of the display interface and the first camera, and a correspondence can be set between the edge sub-window and a different second camera, wherein the first camera and the second camera are associated cameras, and the set correspondences are stored. For example, in each correspondence, an identifier of the first camera corresponding to the central sub-window, an identifier of the second camera corresponding to the edge sub-window when the first camera is in the central sub-window, and a layout of each edge sub-window can be recorded.

When the third camera is one of the second cameras, a correspondence can be set between the central sub-window of the display interface and this second camera, and a correspondence can be set between the edge sub-window and a camera associated with a second camera, and the set correspondence is stored.

When displaying a video image subsequently, the video image of the camera corresponding to each sub-window are called and displayed directly according to the correspondences. For example, when it is determined that the central sub-window corresponds to a certain camera, then a camera corresponding to the edge sub-window and a layout of each edge sub-window can be found when a camera corresponding to the central sub-window is this certain camera according to the correspondences. In this way, the rapid layout and display of multiple sub-windows are realized.

When it is determined that the central sub-window corresponds to the first camera, a second camera corresponding to each edge sub-window can be determined according to correspondences between edge sub-windows and cameras when the video image of the first camera is displayed in the central sub-window included in the sub-window layout rule displays, and then the video image of the corresponding second camera can be displayed in each edge sub-window.

After switching the video image of the target camera displayed in the edge sub-window to the central sub-window for displaying, the associated camera corresponding to each edge sub-window can be determined according to the correspondence between edge sub-windows and cameras included in the sub-window layout rule when the video image of the target camera is displayed in the central sub-window, and then the video image of the corresponding associated camera can be displayed in each edge sub-window.

In another optional embodiment, the above method also includes: each time the displaying of the video image is switched, recording a behavior analysis operation, and recording a display mode of the video image corresponding to each behavior analysis operation; when acquiring a forward behavior analysis instruction or a backward behavior analysis instruction, determining a target behavior analysis operation corresponding to the forward behavior analysis instruction or the backward behavior analysis instruction; displaying a video image of a corresponding camera in the central sub-window and the edge sub-window based on the display mode of the video image corresponding to the target behavior analysis operation.

Each time the displaying of the video image is switched, one behavior analysis operation can be recorded, and a display mode of the video image corresponding to each behavior analysis operation can be recorded, wherein the display mode includes a correspondence between the central sub-window and the edge sub-window and a camera to which the video image belongs. That is to say, correspondences under several consecutive operations can be stored, that is, for each behavior analysis operation in several continuous behavior analysis operations, a correspondence between the central sub-window and a certain camera under each operation and a correspondence between the edge sub-window and different cameras associated with this certain camera can be stored in the order of operation generation. In this way, when displaying the forward behavior analysis or backward behavior analysis subsequently on the display interface, the behavior analysis operation after the number of times of forward and backward can be determined.

In case that the forward behavior analysis instruction or the backward behavior analysis instruction is acquired, a target behavior analysis operation corresponding to the forward behavior analysis instruction or the backward behavior analysis instruction can be determined, and then, based on the display mode of the video image corresponding to the target behavior analysis operation, the video image of the corresponding camera can be displayed in the central sub-window and the edge sub-window.

Optionally, for each behavior analysis operation in a several continuous behavior analysis operations, an identification representing a time sequence of the operations can also be stored, for example, the time generated by an operation can be used as an identification representing the time sequence of this operation, or the identification representing the time sequence of consecutive operations can be updated after each operation, the latest operation sequence number is set to the minimum, and the earlier the operation sequence number is generated, the larger the operation sequence number is. In this way, when the forward behavior analysis or backward behavior analysis is displayed subsequently on the display interface, the behavior analysis operation after the forward or backward times, that is, the target behavior analysis operation, can be determined according to identifications representing time sequence of operations. After determining the behavior analysis operation after the forward or backward times, a correspondence stored under the corresponding operation can be read. Based on the read correspondence, that is, the display mode of the video image corresponding to the target behavior analysis operation, the video image of the camera corresponding to each sub-window can be called and displayed, that is, the video image of the corresponding camera is displayed in the central sub-window and the edge sub-window.

In the embodiment of the present application, when the display interface uses the multi-window mode to display the video image, the edge sub-window displays the video image of the associated camera of the target camera respectively, including: if the associated camera of the target camera to which the video image displayed in the edge sub-window belongs is the same as a target camera associated with the first camera to which the video image displayed in the central sub-window belongs before switching the central sub-window, continuing, by the edge sub-window, to display the video image; otherwise, switching the video image displayed in the edge sub-window to the video image captured by the associated camera of the target camera.

In this way, in the behavior analysis on moving target, when switching the video image displayed in the central sub-window, for the behavior analysis of the moving target before and after switching, if cameras associated with the camera to which the video image displayed in the central sub-window belongs are the same, the video image displayed in the edge sub-window does not need to be replayed. In this case, if the layout of the edge sub-window is modified, the layout of the edge sub-window is modified.

If the behavior analysis on moving object is performed in a fallback mode, the video image displayed in the central sub-window, the video image displayed in the edge sub-window, and a layout relationship between the central sub-window and the edge sub-window are restored. Similarly, if the cameras associated with the camera to which the video image displayed in the central sub-window after restoration are the same with that of before restoration, the video image displayed in the edge sub-window does not need to be replayed.

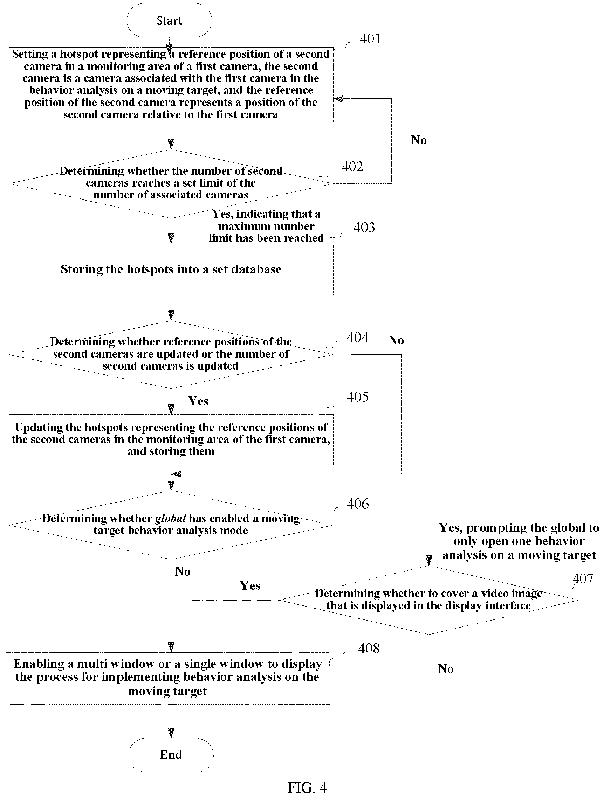

Take a specific example to illustrate the embodiment of the present application. FIG. 4 is a flow diagram of a method for implementing behavior analysis on a moving target provided by an embodiment of the present application, the specific steps include:
step 401, setting a hotspot representing a reference position of a second camera in a monitoring area of a first camera, the second camera is a camera associated with the first camera in the behavior analysis on a moving target, and the reference position of the second camera represents a position of the second camera relative to the first camera;

Referring to FIG. 3, a hotspot representing the reference position of each second camera can be set one by one in the monitoring area of the first camera.
step 402, determining whether the number of second cameras reaches a set limit of the number of associated cameras, if yes, indicating that a maximum number limit has been reached; if not, returning step 401 to continue execution;
step 403, storing the hotspots into a set database; that is, positions of the hotspots can be stored to a set database;
step 404, determining whether reference positions of the second cameras are updated or the number of second cameras is updated, if yes, executing step 405; if not, executing step 406;
step 405, updating the hotspots representing the reference positions of the second cameras in the monitoring area of the first camera, and storing them; that is, in the monitoring area of the first camera, according to the updated reference positions of the second cameras, updating the hotspots representing the reference positions of the second cameras, and storing the updated hotspots; then step 406 can be continued to execute;
step 406, determining whether *global* has enabled a moving target behavior analysis mode, if yes, prompting the *global* to only open one behavior analysis on a moving target, and transferring to step 407 for execution, if not, it means that the moving target behavior analysis mode has not been enabled, and transferring to step 408 for execution; wherein, the *global* is an application for implementing behavior analysis on a moving target, that is, in step 406, it can be determined whether the application for implementing behavior analysis on a moving target has enabled a moving target behavior analysis mode;
step 407, determining whether to cover a video image that is displayed in the display interface, if yes, executing step 408; if not, ending.

In this step, when the moving target behavior analysis mode has been enabled, it is necessary to determine whether to cover a video image currently displayed on the display interface by a video image involved in the behavior analysis on a moving target;

Step 408, enabling a multi-window or a single window to display the process for implementing behavior analysis on a moving target. In other words, it is possible to enable multi-windows to display the video image involved in the behavior analysis on moving target or enable a single window to display the video image involved in the behavior analysis on moving target.

In this method, when entering the moving target behavior analysis mode, the display interface is used to display the video image of the first camera and display the video image of the target camera after switching. The display interface can use the multi-window mode or single window mode. In the video image containing moving target captured by the first camera displayed in the main window or the central sub-window of the display interface, a hotspot representing a reference position of a second camera may be displayed or may not be displayed, or a reference point identifying the reference position of the second camera may be displayed or may not be displayed.

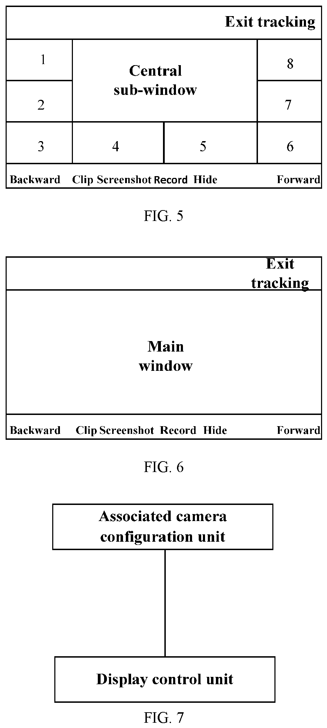

FIG. 5 is a schematic diagram of a display example of a display interface in a multi-window mode provided by an embodiment of the present application, as shown in FIG. 5, in the multi-window mode, the set display interface is divided into 9 sub-windows i.e. one central sub-window, and the other 8 edge sub-windows surrounding the central sub-window; the central sub-window displays a video image containing a moving target captured by the first camera. The video images of the second cameras associated with the first camera are sequentially displayed in the other 8 edge sub-windows based on the reference positions of the second cameras relative to the first camera.

In this case, when it is necessary to display the video image of the target camera, the video image containing the moving target captured by the first camera displayed in the central sub-window is switched to the video image of the target camera, and a starting time point for playing the video image of the target camera in the central sub-window is a time point for playing the video image of the target camera when switching. The other eight edge sub-windows respectively display different video images provided by cameras associated with the target camera in the behavior analysis on moving target, specifically, a video image of which camera associated with the target camera in the process of moving target behavior analysis is displayed in each sub-window of the other eight edge sub-windows is determined according to a reference position of this associated camera relative to the target camera, thereby completing the layout settings of eight edge sub-windows.

It can be seen that in one embodiment, the multi-window mode can be a window segmentation mode of "1+8", a window in which the video image containing the moving target captured by the first camera is currently displayed is the central sub-window, and windows displaying video images of other associated second cameras is tiled around the central sub-window.

FIG. 6 is a schematic diagram of a display example of a display interface in a single window mode provided by an embodiment of the present application, as shown in FIG. 6, in the single window mode, the display interface is used as a main window to display the video image containing the moving target captured by the first camera. When it is necessary to display the video image of the target camera, the video image containing the moving target captured by the first camera displayed in the main window is switched to the video image of the target camera, and the starting time point for playing the video image of the target camera in the main window is the time point for playing the video image of the target camera when switching.

In one specific embodiment, an active trigger switching display mode is adopted. Before entering the moving target behavior analysis mode, the display interface can backward or forward play the video image of the first camera. In this process, the user browses the video image of the first camera. When finding that a moving target appears in the video image of the first camera, the user clicks a behavior analysis button on a progress bar of the display interface to enter the moving target behavior analysis mode. The moment of entering the moving target behavior analysis mode is the time point on the progress bar, that is, a current time point of the video image of the first camera. At this time, the hotspots representing the reference positions of the second cameras can be displayed on the display interface. The user clicks and triggers one of the hotspots to switch according to a moving trend of the moving target, the switching time point is the time point on the progress bar of the display interface at the moment when the hotspot is clicked. Then the video image of the target camera corresponding to the hotspot can be called and displayed on the display interface. The time point of calling and displaying the video image of the target camera corresponding to the hotspot on the display interface is also the time point on the progress bar of the display interface under the behavior analysis mode at the moment when the hotspot is clicked. In this way, the time continuity of the behavior analysis on a moving target can be ensured.

In another specific embodiment, when the behavior analysis on a moving target is to be recorded, the user can click a record button on the display interface, or can actively trigger a recording operation once entering the moving target behavior analysis mode. Then, the video image containing the moving target captured by the first camera displayed on the display interface can be recorded, a starting time for recording the video image of the first camera is a time point corresponding to the video image when the record button of the display interface is clicked. When the display interface is switched to the video image of the target camera and displayed, the displayed video image of the target camera can be continued to be recorded. The starting time for recording the video image of the target camera is the time point corresponding to the video image when the video image of the target camera is displayed, and the entire recording process is stopped until the user clicks an exit button of the display interface. Before this, the set display interface can also display prompt information of whether to store the recording, so that the user can trigger a selection of storing based on the prompt information, and then store the recorded video image, which is more convenient for users to use.

In another specific embodiment, when the user clicks to exit a moving target behavior analysis mode button, the moving target behavior analysis mode will exit, and an original video image displayed on the display interface before entering the behavior analysis will be restored.

In a specific embodiment, it can be seen from FIGS. 5 and 6 that the display interface can also include: a title bar and a tool bar, wherein the title bar can include an exit button to exit the moving target behavior analysis mode after triggering; the tool bar can include a clip button, a screenshot button, a record button and a hide button. After triggering the clip button, the screenshot button and the record button respectively, operations such as clip, screenshot and record of the video image displayed in the corresponding main window or central sub-window are performed. After triggering the hide button, an operation for hiding a hotspot in the video image displayed in the corresponding main window or central sub-window is performed. The tool bar can also include a backward button and a forward button, which can be triggered to restore the previous several moving target behavior analysis operations. After entering the behavior analysis mode, the recording can be automatically triggered or directly triggered by the user's click. When exiting the behavior analysis mode, the user will be prompted whether to store the recorded video image.

The user can click the backward button and the forward button to restore the last operation of behavior analysis on a moving target, and restore the latest operation of behavior analysis operation with a set number of times, for example, the set number of times with a maximum record is set to 16 times, so that a backward behavior analysis operation will be triggered when the next operation is wrong. That is to say, the user can click the backward button to switch to a last operation of behavior analysis on a moving target, and click a forward button to switch to a next operation of behavior analysis on a moving target.

In the behavior analysis on a moving target, the recording or editing is only for the central sub-window or the main window. After switching to the moving target behavior analysis mode, and after the central sub-window or the main window plays the video image successfully, an instruction for recording can be issued through the record button in the tool bar to record and cache a video image played by the central sub-window or the main window, and after waiting for the end of the behavior analysis on a moving target, an instruction for end recording is triggered to stop the recording process.

It can be seen that the behavior analysis on a moving target is actually the process of switching between different groups of associated cameras to display video images.

FIG. 7 is a schematic diagram of an apparatus for implementing behavior analysis on a moving target provided by an embodiment of the present application, the apparatus can be a video monitoring client or other device, which is not limited here, including: an associated camera configuration unit, and a display control unit, wherein,
the associated camera configuration unit is configured for determining a reference position of a second camera in a monitoring area of a first camera, the second camera is a camera associated with the first camera in the behavior analysis on a moving target, and the reference position of the second camera represents a position of the second camera relative to the first camera;
the display control unit is configured for displaying a video image containing the moving target captured by the first camera; displaying a video image of the target camera when the moving target moves into a range to which a reference position of a target camera belongs in the reference position of the second camera.

In one embodiment of the apparatus, the associated camera configuration unit is specifically configured for determining a position of a reference point representing the reference position of the second camera in the monitoring area; the reference position of the second camera is determined in the monitoring area of the first camera according to the position of the reference point in the monitoring area, an image resolution of the first camera and a display resolution of a display interface.

In one embodiment of the apparatus, the reference point of the reference position of the second camera is a reference point in the hotspot representing the reference position of the second camera; the associated camera configuration unit is further configured for determining the position of the reference point in a hotspot representing the reference position of the second camera in the monitoring area; the hotspot representing the reference position of the second camera is determined in the monitoring area of the first camera according to the position of the reference point in the hotspot in the monitoring area, an image resolution of the first camera, a display resolution of a display interface, and size information of the hotspot.

In one embodiment of the apparatus, the display control unit is also configured for determining whether the moving target moves into a range to which the reference position of the target camera belongs in the reference position of the second camera before displaying a video image of the second camera corresponding to a target hotspot when the moving target moves to a reference range of the target hotspot in a hotspot;
or, the display control unit is also configured for marking the reference position of the second camera on the video image containing the moving target captured by the first camera after determining the reference position of the second camera in the monitoring area of the first camera; before displaying the video image of the target camera, acquiring an instruction for selecting the reference position of the target camera.

In one embodiment of the apparatus, the display control unit is specifically configured for switching to display the video image of the target camera in a window where the video image containing the moving target captured by the first camera is displayed, wherein, in the window, a time corresponding to a first frame of the video image of the target camera displayed and a time corresponding to a last frame of the video image of the first camera displayed are continuous.

In one embodiment of the apparatus, the display control unit is also configured for, when it is necessary to record the behavior analysis on the moving target after displaying the video image containing the moving target captured by the first camera, acquiring a moving target behavior analysis recording instruction for recording the video image containing the moving target captured by the first camera. The start time for recording the video image of the first camera is a time point corresponding to the video image when the moving target behavior analysis recording instruction is acquired; after the video image of the target camera is displayed, the displayed video image of the target camera is recorded, and the start time for recording the video image of the moving target is a time point corresponding to the video image when the video image of the target camera is displayed.

In one embodiment of the apparatus, the display control unit is specifically configured for determining a reference position of an associated camera in a monitoring area of the target camera, the associated camera is a camera associated with the target camera in the behavior analysis on moving target, and the reference position of the associated camera represents a position of the associated camera relative to the target camera; displaying a video image containing the moving target captured by the target camera.

In one embodiment of the apparatus, the video image containing a moving target captured by the first camera is displayed in the central sub-window, the video image of the second camera is displayed in the edge sub-window, and an arrangement position of the edge sub-window is set according to the reference position of the second camera to which the displayed video image belongs relative to the first camera; the display control unit is specifically configured for switching the video image of the target camera displayed in the edge sub-window to the central sub-window for displaying. The arrangement position of the edge sub-window is set according to the reference position of an associated camera of the target camera to which the displayed video image belongs relative to the target camera, and the edge sub-window displays a video image of the associated camera of the target camera respectively.

In one embodiment of the apparatus, the video image containing the moving target captured by the first camera is displayed in the central sub-window, the video image of the second camera is displayed in the edge sub-window, the video image of the second camera displayed in the edge sub-window is determined according to a preset sub-window layout rule, which includes multiple corresponding relationships. Each corresponding relationship includes a camera corresponding to the edge sub-window when a video image of a third camera is displayed in the central sub-window, the third camera is one of the first camera and the second camera.
displaying the video image of the target camera includes:
switching the video image of the target camera displayed in the edge sub-window to the central sub-window for displaying, when the video image of the target camera is displayed in the central sub-window, determining an associated camera of the target camera corresponding to each edge sub-window according to a target correspondence in the sub-window layout rule, displaying a video image of the associated camera in this edge sub-window, the target correspondence comprises a camera corresponding to the edge sub-window when the video image of the target camera is displayed in the central sub-window.

In one embodiment of the apparatus, the apparatus also includes a behavior analysis recording unit, an analysis operation determination unit, and an image display unit, wherein:
the behavior analysis recording unit is configured for recording, each time the displaying of the video image is switched, a behavior analysis operation, and recording a display mode of the video image corresponding to each behavior analysis operation, and the display mode includes a correspondence between the central sub-window and the edge sub-window and a camera to which the video image belongs;
the analysis operation determination unit is configured for determining, when acquiring a forward behavior analysis instruction or a backward behavior analysis instruction, a target behavior analysis operation corresponding to the forward behavior analysis instruction or the backward behavior analysis instruction;
the image display unit is configured for displaying a video image of a corresponding camera in the central sub-window and the edge sub-window based on the display mode of the video image corresponding to the target behavior analysis operation.

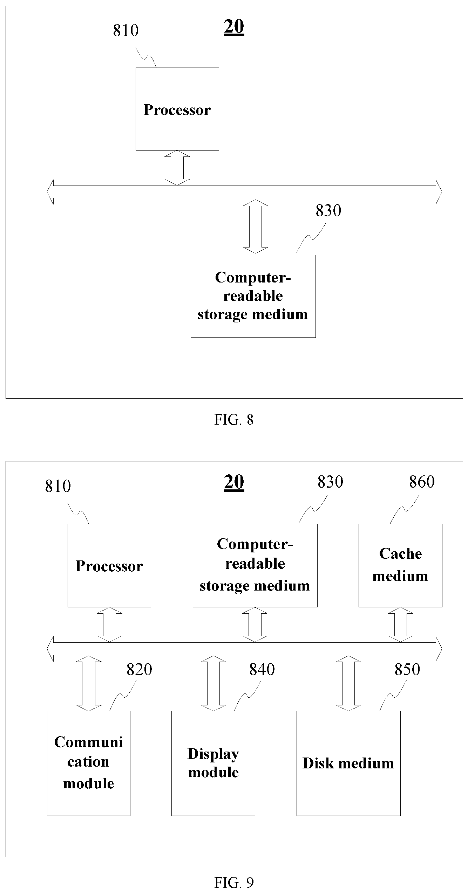

The embodiment of the present application also provides an electronic device, as shown in FIG. 8, which is an exemplary structural diagram of an electronic device provided by an embodiment of the present application, in which the apparatus for implementing the embodiment of the present application can be integrated. Specifically,
the electronic device 20 may include a processor 810 of one or more processing cores, a memory 830 of one or more computer-readable storage medium, and a computer program stored on the computer-readable storage medium of the memory 830 and executable by the processor 810. When executing the program of the memory, the method for implementing behavior analysis on a moving target described in the above embodiment can be realized.

FIG. 9 is a schematic diagram of a specific structure of an electronic device provided by an embodiment of the present application, as shown in the figure, the electronic device 20 can also include: a communication module 820 for communicating with other entities (in wired or wireless mode) to obtain a video image of a first camera, a video image of a second camera, and a video image of a camera associated with a target camera; a memory 830 of a computer readable storage medium, which can store data and information, and a portion of the data and information which, when executed by a processor 810, cause the processor 810 to perform the method described in the above embodiment.

In addition, the electronic device 20 can also include a display module 840, which performs interface display on the display module 840 when the processor 810 executes the method described in the above embodiment. The electronic device 20 can also include: a disk medium 850, which can be used to store video image data and a correspondence between the sub-window and the camera to which the displayed video image belongs, and store the recorded video image involved in the behavior analysis on moving target, and the like; a cache medium 860, which can at least be used to cache the recorded video image involved in the behavior analysis on moving target.

In another embodiment, there is provided a non-transitory computer-readable storage medium having stored thereon instructions, and some of the instructions that, when executed by the processor, cause the processor to implement the method described in the above embodiment.

In another embodiment, it is provided a computer program product containing instructions which, when running on a computer, cause the computer to implement the method described in the above embodiment.

The description is only for preferred embodiments of the present application, and embodiments are not so limited. Any modifications, substitutions, improvements, etc., which are made within the spirit and principles of the present application, will fall into the protection scope of the present application.

## Claims

1. A method for implementing behavior analysis on a moving target, comprising:
determining a reference position of a second camera in a monitoring area of a first camera, wherein the second camera is a camera associated with the first camera in the behavior analysis on the moving target, and the reference position of the second camera represents a position of the second camera relative to the first camera;
displaying a video image containing the moving target captured by the first camera;
displaying a video image of a target camera when the moving target moves into a range to which a reference position of the target camera belongs in the reference position of the second camera.

2. The method of claim 1, wherein determining a reference position of a second camera in a monitoring area of a first camera comprises:
determining a position of a reference point for the reference position of the second camera in the monitoring area of the first camera;
determining the reference position of the second camera in the monitoring area of the first camera according to the position of the reference point in the monitoring area of the first camera, an image resolution of the first camera, and a display resolution of a display interface.

3. The method of claim 2, wherein, the reference point for the reference position of the second camera is a reference point in a hotspot representing the reference position of the second camera;
wherein determining the position of the reference point for the reference position of the second camera in the monitoring area of the first camera comprises:
determining a position of the reference point in the hotspot representing the reference position of the second camera in the monitoring area;
wherein determining the reference position of the second camera in the monitoring area of the first camera according to the position of the reference point in the monitoring area of the first camera, an image resolution of the first camera, and a display resolution of a display interface comprises:
determining the hotspot representing the reference position of the second camera in the monitoring area of the first camera according to the position of the reference point in the hotspot in the monitoring area, the image resolution of the first camera, the display resolution of the display interface and size information of the hotspot.

4. The method of claim 1, wherein, before displaying a video image of a target camera when the moving target moves into a range to which a reference position of the target camera belongs in the reference position of the second camera, the method comprises:
determining whether the moving target moves into the range to which the reference position of the target camera belongs in the reference position of the second camera; or,
after determining the reference position of the second camera in the monitoring area of the first camera, the method comprises: marking the reference position of the second camera on the video image containing the moving target captured by the first camera;
before displaying the video image of the target camera, the method comprises:
acquiring an instruction for selecting the reference position of the target camera.

5. The method of claim 1, wherein displaying the video image of the target camera comprises:
switching to display the video image of the target camera in a window where the video image containing the moving target captured by the first camera is displayed, wherein, in the window, a time corresponding to a first frame of the video image of the target camera displayed and a time corresponding to a last frame of the video image of the first camera displayed are continuous.

6. The method of claim 1, wherein displaying the video image of the target camera comprises:
determining a reference position of an associated camera in a monitoring area of the target camera, wherein the associated camera is a camera associated with the target camera in the behavior analysis on the moving target, and the reference position of the associated camera represents a position of the associated camera relative to the target camera; and
displaying a video image containing the moving target captured by the target camera.

7. The method of claim 1, wherein the video image containing the moving target captured by the first camera is displayed in a central sub-window, a video image of the second camera is displayed in an edge sub-window, and an arrangement position of the edge sub-window is set according to the reference position of the second camera to which the displayed video image belongs relative to the first camera;
wherein displaying the video image of the target camera comprises:
switching the video image of the target camera displayed in the edge sub-window to the central sub-window for displaying, wherein the arrangement position of the edge sub-window is adjusted according to the reference position of an associated camera of the target camera to which the displayed video image belongs relative to the target camera, and the edge sub-window displays a video image of the associated camera of the target camera.

8. The method of claim 7, wherein displaying, by the edge sub-window, the video image of the associated camera of the target camera comprises:
if the associated camera of the target camera to which the video image displayed in the edge sub-window belongs is the same as a target camera associated with the first camera to which the video image displayed in the central sub-window belongs before switching the central sub-window, continuing, by the edge sub-window, to display the video image; otherwise, switching the video image displayed in the edge sub-window to the video image captured by the associated camera of the target camera.

9. The method of claim 1, wherein the video image containing the moving target captured by the first camera is displayed in a central sub-window, a video image of the second camera is displayed in an edge sub-window, the video image of the second camera displayed in the edge sub-window is determined according to a preset sub-window layout rule, wherein the sub-window layout rule comprises multiple corresponding relationships, each corresponding relationship comprises a camera corresponding to the edge sub-window when a video image of a third camera is displayed in the central sub-window, the third camera is one of the first camera and the second camera;
wherein displaying the video image of the target camera comprises:
switching the video image of the target camera displayed in the edge sub-window to the central sub-window for displaying; when the video image of the target camera is displayed in the central sub-window, determining an associated camera of the target camera corresponding to each edge sub-window according to a target correspondence in the sub-window layout rule, and displaying a video image of the associated camera in this edge sub-window, wherein the target correspondence comprises a camera corresponding to the edge sub-window when the video image of the target camera is displayed in the central sub-window.

10. The method of any one of claims 7-9, further comprising:
each time the displaying of the video image is switched, recording a behavior analysis operation, and recording a display mode of the video image corresponding to each behavior analysis operation, and the display mode comprises a correspondence between the central sub-window and the edge sub-window and a camera to which the displayed video image belongs;
when acquiring a forward behavior analysis instruction or a backward behavior analysis instruction, determining a target behavior analysis operation corresponding to the forward behavior analysis instruction or the backward behavior analysis instruction;
displaying a video image of a corresponding camera in the central sub-window and the edge sub-window based on the display mode of the video image corresponding to the target behavior analysis operation.

11. An apparatus for implementing behavior analysis on a moving target, wherein the apparatus comprises an associated camera configuration unit and a display control unit,
wherein the associated camera configuration unit is configured for determining a reference position of a second camera in a monitoring area of a first camera, wherein the second camera is a camera associated with the first camera in the behavior analysis on the moving target, and the reference position of the second camera represents a position of the second camera relative to the first camera;
the display control unit is configured for displaying a video image containing the moving target captured by the first camera; displaying a video image of a target camera when the moving target moves into a range to which a reference position of the target camera belongs in the reference position of the second camera.

12. The apparatus of claim 11, wherein the display control unit is further configured for determining whether the moving target moves into a range to which the reference position of the target camera belongs in the reference position of the second camera before displaying a video image of the second camera corresponding to a target hotspot when the moving target moves into a reference range of the target hotspot in a hotspot;
or, the display control unit is further configured for marking the reference position of the second camera on the video image containing the moving target captured by the first camera after determining the reference position of the second camera in the monitoring area of the first camera; and before displaying the video image of the target camera, acquiring an instruction for selecting the reference position of the target camera.

13. The apparatus of claim 12, wherein the display control unit is further configured for displaying the video image containing the moving target captured by the first camera in a central sub-window, displaying the video image of the second camera in an edge sub-window, wherein an arrangement position of the edge sub-window is set according to the reference position of the second camera to which the displayed video image belongs relative to the first camera;
when displaying the video image of the target camera, the display control unit is specifically configured for switching the video image of the target camera displayed in the edge sub-window to the central sub-window for displaying, wherein the arrangement position of the edge sub-window is adjusted according to the reference position of an associated camera of the target camera to which the displayed video image belongs relative to the target camera, the edge sub-window displays a video image of the associated camera of the target camera.

14. An electronic device, comprising: a processor with one or more processing cores, a memory with one or more computer readable storage medium, and a computer program stored on the memory and executable by the processor, wherein the program, when executed by the processor, causes the processor to implement the method for implementing behavior analysis on a moving target according to any one of claims 1-10.

15. A non-transitory computer-readable storage medium having stored thereon instructions, wherein a portion of the instructions, when executed by a processor, causes the processor to implement the method for implementing behavior analysis on a moving target according to any one of claims 1-10.

16. A computer program product containing instructions which, when running on a computer, cause the computer to implement the method for implementing behavior analysis on a moving target according to any one of claims 1-10.
